# EUROPÄISCHE PATENTSCHRIFT

(11) **EP 2 726 816 B1**
(45) Veröffentlichungstag und Bekanntmachung des Hinweises auf die Patenterteilung: **11.10.2017**
(21) Anmeldenummer: 12733062.9
(22) Anmeldetag: 28.06.2012
(51) Int. Cl.: G01C 15/00, G01B 11/24, G01S 5/16, G01S 17/89, G06T 7/13, G06T 7/181

(54) **KONSTRUKTIONSVERMESSUNGSGERÄT ZUM VERFOLGEN, VERMESSEN UND MARKIEREN VON KANTEN UND ECKPUNKTEN ANEINANDERGRENZENDER OBERFLÄCHEN**
CONSTRUCTION MEASURING DEVICE FOR DETECTING, MEASURING AND MARKING EDGES AND CORNER POINTS OF BORDERING SURFACES
DISPOSITIF DE MESURE DE CONSTRUCTION DESTINÉ À SUIVRE, MESURER ET MARQUER DES SURFACES CONTIGUËS AU NIVEAU DES BORDS ET DES POINTS DE COIN

(30) Priorität: 01.07.2011 EP 11172439
(43) Veröffentlichungstag der Anmeldung: 07.05.2014
(73) Patentinhaber: Hexagon Technology Center GmbH, 9435 Heerbrugg (CH)
(72) Erfinder: METZLER, Bernhard, A-6850 Dornbirn (AT)
(74) Vertreter: Gyaja, Christoph Benjamin
(86) Internationale Anmeldenummer: PCT/EP2012/062647
(87) Internationale Veröffentlichungsnummer: WO 2013/004602

(56) Entgegenhaltungen:
- EP-A2- 1 574 821
- WO-A1-2008/089792
- MORTENSEN E ET AL: "Adaptive boundary detection using 'live-wire' two-dimensional dynamic programming", COMPUTERS IN CARDIOLOGY 1992, PROCEEDINGS OF DURHAM, NC, USA 11-14 OCT. 1992, LOS ALAMITOS, CA, USA,IEEE COMPUT. SOC, US, 11. Oktober 1992 (1992-10-11), Seiten 635-638, XP010032086, DOI: 10.1109/CIC.1992.269378 ISBN: 978-0-8186-3552-6

## Beschreibung

Die Erfindung betrifft ein Konstruktionsvermessungsgerät zum Vermessen und Markieren von Raumpunkten entlang Kanten und/oder Eckpunkten zwischen aneinandergrenzenden Oberflächen einer Konstruktion im Rahmen von Bau und/oder Ausbau - insbesondere Innenausbau - von Gebäuden nach dem Oberbegriff des Anspruchs 1 sowie ein zugehöriges Verfahren nach dem Oberbegriff des Anspruchs 9 zum Verfolgen und Vermessen bzw. Markieren von Raumpunkten entlang Kanten und/oder Eckpunkten zwischen aneinandergrenzenden Oberflächen einer Konstruktion mittels des erfindungsgemässen Konstruktionsvermessungsgeräts und ein Computerprogrammprodukt zur Bereitstellung, Steuerung und Durchführung einer Kantenverfolgungs- und Projektionsfunktionalität für ein solches Gerät nach dem Oberbegriff des Anspruchs 15.

Bezüglich Aufgaben zur Vermessung von Konstruktionen ist ein wesentlicher Aspekt, dass signifikante zu vermessende Raumpunkte vielfach miteinander durch Kanten verbunden sind. Beispielsweise verbindet eine Kante, welche eine Wand eines Raumes von der Decke trennt, zwei Eckpunkte des Raumes. Sollen beispielsweise alle vier Eckpunkte der Decke eines Raumes mit rechteckigem Grundriss vermessen werden, so kann die Anzielrichtung eines Konstruktionsvermessungsgeräts von einem ersten Eckpunkt zu einem nächsten Eckpunkt verändert werden, indem eine zwischen diesen Eckpunkten verlaufende Kante verfolgt wird.

Im Fall einfacher konventioneller Konstruktionsvermessungsgeräte wird manuell ein Raumpunkt, z.B. ein Eckpunkt, angezielt, und die Anzielrichtung wird dann manuell zu einem nächsten zu vermessenden Raumpunkt, z.B. einem weiteren Eckpunkt, verändert.

Die DE 196 48 626 beispielsweise offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp-und Dreheinrichtung zur Ausrichtung und Richtungsmessung, ein Zielfernrohr sowie eine elektronische Auswerteeinheit zur Winkeldaten- und Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, wird in der DE 196 48 626 nicht offenbart. Insbesondere gibt es in dieser Schrift keinerlei Hinweise für Möglichkeiten zu einer automatischen Verfolgung von Kanten zwischen benachbarten zu vermessenden Eckpunkten.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird jedoch keine automatisch ablaufende Funktionalität zur Verfolgung von Kanten, ausgehend von lediglich einem definierten, ersten Raumpunkt, offenbart, ebenso wenig wie eine automatisierte sequentielle Vermessung mehrerer Raumpunkte, zu vergleichen beispielsweise mit einem Scan.

In der EP 1 733 185 werden eine Vorrichtung und ein Verfahren offenbart, womit speziell Kanten auf einer polygonalen, ansonsten ebenen Oberfläche genau vermessen werden sollen. Es wird jedoch keine automatisch ablaufende Funktionalität zur Verfolgung von Kanten, ausgehend von lediglich einem definierten, ersten Raumpunkt, offenbart, ebenso wenig wie eine automatisierte sequentielle Vermessung mehrerer Raumpunkte.

Die EP 2 053 353 offenbart ein referenzlinienprojizierendes Gerät mit einem elektro-optischen Distanzmesser. Gemäss der Lehre dieser Anmeldeschrift wird ein optischer Referenzstrahl, insbesondere ein Laserstrahl, entlang eines definierten Referenzpfads geführt. Im Zusammenhang mit dem Durchlaufen des Referenzpfades erfolgt eine Entfernungsmessung zu mindestens einem Punkt des Referenzpfads durch Aussenden eines zum Referenzstrahl parallelen oder koaxialen Messstrahls oder Verwenden des Referenzstrahls als Messstrahl. Nach dem Empfangen von Anteilen des zurückgeworfenen Messstrahls wird ein Signal aus diesen Anteilen abgeleitet und eine Distanz zu dem mindestens einen Punkt aus dem Signal bestimmt, wobei das Führen entlang des Referenzpfads mindestens einmal wiederholt wird und bei jedem Durchlaufen des Referenzpfads für den mindestens einen Punkt jeweils eine Distanz oder distanzbezogene Grösse ermittelt wird. Bei winkelsynchronen Distanzmessungen werden also gleiche Punkte mehrfach abgetastet.

Mittels Integration eines Distanzmessers ermöglicht das in der EP 2 053 353 offenbarte System auch eine Steuerung der Projektion anhand einer ermittelten Oberflächentopographie. Insbesondere wird offenbart, dass nach Bestimmung eines Oberflächenprofils eine Projektion auf eine gekrümmte Oberfläche so angepasst werden kann, dass Verzerrungen durch die gekrümmte Oberfläche kompensiert werden und die Projektion der unverzerrten Kontur eines auszumessenden bzw. markierenden Objekts entspricht.

Auch in der EP 2 053 353 wird jedoch keine Funktionalität für eine, insbesondere automatische, Verfolgung von Kanten, ausgehend von lediglich einem definierten, ersten Raumpunkt, offenbart oder nahe gelegt.

Die WO 2008/089792 A1 offenbart ein Vermessungsgerät mit einer Kantendetektionsfunktionalität. Um die Bildpunkte herum, in denen Ecken oder Kanten detektiert werden, wird ein Vermessungsscan mit einem dichteren Punkteraster durchgeführt.

Aufgabe der Erfindung ist die Bereitstellung eines Konstruktionsvermessungsgeräts zum Vermessen und Markieren von signifikanten Raumpunkten, insbesondere Verfolgung von Kanten und Vermessung von deren Eckpunkten, mit einem verbesserten Bedienkomfort und entsprechend erhöhter möglicher Vermessungs- bzw. Markierungsgeschwindigkeit.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Konstruktionsvermessungsgerät zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau - insbesondere Innenausbau von Gebäuden. Das Gerät umfasst eine Basis und ein an der Basis um eine Drehachse innerhalb eines Winkelbereichs eines Azimutal- bzw. Horizontalwinkels drehbar gelagertes Oberteil. Am Oberteil ist eine um eine Schwenkachse innerhalb eines Winkelbereichs eines Elevations- bzw. Vertikalwinkels schwenkbar gelagerte, mit einer zur Emission eines Laserstrahls ausgebildeten Laserquelle und einem Entfernungsbestimmungsdetektor zur Bereitstellung einer Distanzmessfunktionalität ausgestattete Anzieleinheit angeordnet. Die Anzieleinheit umfasst ausserdem einen bildgebenden Detektor, insbesondere eine Kamera, und eine Ausrichtungsanzeigefunktionalität zur Angabe einer Ausrichtung der Anzieleinheit auf einen Raumpunkt als Anzielpunkt.

Das erfindungsgemässe Konstruktionsvermessungsgerät umfasst des Weiteren eine Auswerte- und Steuereinheit mit einem Display, auf dem die Ausrichtung der Anzieleinheit mittels der Ausrichtungsanzeigefunktionalität, überblendbar zu einem Bild eines aktuell angezielten Raumpunkts, anzeigbar ist.

Das Gerät umfasst einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung der horizontalen und vertikalen Ausrichtung, d.h. des Azimut- und des Elevationswinkels, erfassbar. Die Auswerte- und Steuereinheit ist mit der Laserquelle, dem Entfernungsbestimmungsdetektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen. Ausserdem ist die Auswerte- und Steuereinheit mit dem bildgebenden Detektor verbunden.

Zusätzlich kann das Gerät mit zwei Neigungssensoren, vorzugsweise mit zwei Libellensensoren ("bubble sensors"), deren Messdaten dann ebenfalls an die Auswerte- und Steuereinheit übermittelt werden, ausgestattet sein. Damit kann zusätzlich die Ausrichtung der Anzieleinheit bezüglich des Schwerefeld-Vektors der Erde bestimmt werden.

Erfindungsgemäss weist das Konstruktionsvermessungsgerät eine nach Auslösung zumindest teilweise automatisch ablaufende Kantenverfolgungs- und Projektionsfunktionalität zum Verfolgen und Vermessen bzw. Markieren von Kanten und/oder Eckpunkten, und gegebenenfalls entlang einer Kante befindlichen Raumpunkten, zwischen aneinandergrenzenden, beliebig geformten Oberflächen der Konstruktion auf.

Im Rahmen dieser Funktionalität werden, nach Ausrichtung der Anzieleinrichtung mit der Ausrichtungsanzeigefunktionalität auf einen bekannten bzw. von einem Benutzer definierten ersten Eckpunkt zwischen aneinandergrenzenden Oberflächen der Konstruktion und einer Bildaufnahme dieses ersten Eckpunkts mit seiner Umgebung mittels einer Kantenbestimmung durch Bildverarbeitung Kantenlinien bestimmt, und eine benutzerdefinierte Kantenlinie wird von der Anzieleinheit mindestens bis zu einem weiteren Eckpunkt automatisch verfolgt, wobei gegebenenfalls entlang der benutzerdefinierten Kantenlinie befindliche Raumpunkte vermessen werden.

Vorzugsweise ist die Kantenverfolgungs- und Projektionsfunktionalität dazu ausgelegt, einem Benutzer Vorschläge zur Verfolgung von Kantenlinien durch Symbole auf einem Display der Auswerte- und Steuereinheit dem Benutzer darzustellen, und nach Auswahl und Bestätigung eines durch ein Symbol dargestellten Vorschlags eine ausgewählte Kantenlinie von der Anzieleinheit mindestens bis zu einem weiteren Eckpunkt automatisch zu verfolgen, wobei gegebenenfalls entlang der benutzerdefinierten Kantenlinie befindliche Raumpunkte vermessen werden.

Erfindungsgemäss kann im Rahmen der Verfolgung einer ausgewählten Kantenlinie durch entsprechende Veränderung der Ausrichtung der Anzieleinheit in horizontaler und/oder elevativer Ausrichtung kontinuierlich und/oder periodisch eine Aufnahme von Bildern und eine Bestimmung einer zu einer Kante gehörenden Kantenlinie mittels Kantenextraktion durch digitale Bildverarbeitung erfolgen, wobei im Bild eine Abweichung der Ausrichtungsanzeigenfunktionalität von der zu der ausgewählten Kante gehörigen Kantenlinie bestimmt wird, woraus eine entsprechende Korrektur der Ausrichtung der Anzieleinheit bestimmt wird und darauf basierend die Anzieleinheit auf die ausgewählte Kantenlinie ausgerichtet wird.

Gemäss einer möglichen Ausführungsform der Erfindung kann nach Verfolgung einer Kantenlinie von dem ersten Eckpunkt bis zu einem ersten weiteren Eckpunkt die Kantenverfolgungs- und Projektionsfunktionalität angehalten, benutzerdefiniert eine Vermessung des ersten weiteren Eckpunkts durchgeführt und/oder die Kantenverfolgungs- und Projektionsfunktionalität bis zu einem weiteren Eckpunkt fortgesetzt werden.

Vorschläge zur Verfolgung von Kantenlinien können durch Symbole auf einem Display der Auswerte- und Steuereinheit dem Benutzer dargestellt werden, und eine Auswahl einer zu verfolgenden Kantenlinie bzw. Bestätigung eines Vorschlags kann durch Anklicken bzw. Berühren des zugehörigen Symbols auf einem Touchscreen erfolgen.

Vorschläge zur Verfolgung von Kantenlinien können auch durch alphanumerische Zeichen auf einem Display der Auswerte- und Steuereinheit dem Benutzer dargestellt werden, und eine Auswahl einer zu verfolgenden Kantenlinie bzw. Bestätigung eines Vorschlags kann durch Eingabe eines entsprechenden alphanumerischen Zeichens auf einer Tastatur der Auswerte- und Steuereinheit erfolgen.

Eine Auswahl einer zu verfolgenden Kante kann auch durch Markieren einer Linie auf einem Display der Auswerte- und Steuereinheit, beispielsweise mittels eines Stifts auf einem Touchscreen, erfolgen.

Kennzeichen einer besonderen Ausführungsform des erfindungsgemässen Konstruktionsvermessungsgeräts ist, dass die Kantenverfolgungs- und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

Die Kantenverfolgungs- und Projektionsfunktionalität kann ausgelegt sein zur Verfolgung rechtwinklig zueinander angeordneter Kantenlinien.

Die Kantenverfolgungs- und Projektionsfunktionalität kann auch ausgelegt sein zur Verfolgung von in einem von 90° abweichenden Winkel zueinander angeordneter Kantenlinien.

Des Weiteren kann die Kantenverfolgungs- und Projektionsfunktionalität ausgelegt sein zur Verfolgung gebogener Kantenlinien.

Ein weiterer Gegenstand der Erfindung ist ein Computerprogrammprodukt mit Programmcode, der auf einem maschinenlesbaren Träger gespeichert ist, zur Bereitstellung, Steuerung und Durchführung der Kantenverfolgungs- und Projektionsfunktionalität des erfindungsgemässen Konstruktionsvermessungsgeräts nach einer der vorgenannten Ausführungsformen. Vorzugsweise wird das Programm auf einer als Auswerte- und Steuereinheit des erfindungsgemässen Konstruktionsvermessungsgeräts ausgebildeten elektronischen Datenverarbeitungseinheit ausgeführt.

Ein weiterer Gegenstand der Erfindung ist ein Verfahren zum Verfolgen und Vermessen bzw. Markieren von Raumpunkten entlang Kanten und/oder von Eckpunkten zwischen aneinandergrenzenden Oberflächen einer Konstruktion im Rahmen von Bau und/oder Ausbau - insbesondere Innenausbau von Gebäuden - mittels eines erfindungsgemässen Konstruktionsvermessungsgeräts nach einer der vorgenannten Ausführungsformen. Dem erfindungsgemässen Verfahren folgend wird zunächst die Anzieleinheit ausgerichtet auf einen bekannten bzw. von einem Benutzer definierten ersten Eckpunkt zwischen aneinandergrenzenden Oberflächen der Konstruktion bzw. des Raumes. Dieser erste Eckpunkt wird angemessen, seine Raumkoordinaten werden gespeichert, und es wird ein Bild dieses ersten Eckpunkts mit seiner Umgebung aufgenommen. Im Rahmen der Kantenverfolgungs- und Projektionsfunktionalität wird eine Kantenbestimmung mittels Bildverarbeitung vorgenommen, und es werden von diesem ersten Eckpunkt ausgehende Kantenlinien bestimmt. Eine benutzerdefinierte Kantenlinie wird dann automatisch bis zu einem weiteren Eckpunkt verfolgt, wobei gegebenenfalls entlang dieser Kantenlinie befindliche Raumpunkte vermessen werden.

Weitere Ausführungsformen des erfindungsgemässen Verfahrens sind den abhängigen Ansprüchen zu entnehmen.

Das erfindungsgemässe Konstruktionsvermessungsgerät und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen illustrieren
- Figur 1a und 1b: ein erfindungsgemässes Konstruktionsvermessungsgerät zum Verfolgen und Vermessen bzw. Markieren von Raumpunkten von Oberflächen einer Konstruktion, insbesondere Innenräumen von Gebäuden;
- Figur 2a bis 3b: die grundsätzliche Funktionsweise der Kantenverfolgungs- und Projektionsfunktionalität des erfindungsgemässen Konstruktionsvermessungsgeräts und des zugehörigen erfindungsgemässen Vermessungsverfahrens;
- Figur 4a bis 4c: verschiedene Varianten der Kantenverfolgungs- und Projektionsfunktionalität mit unterschiedlichen Eingabemöglichkeiten für einen Benutzer zur Veranlassung der Verfolgung einer Kantenlinie; und
- Figur 5a und 5b: weitere Details zu der Funktionalität der Kantenverfolgung zwecks einer Erklärung des Verfahrensablaufs für eine sequentielle Eckpunktbestimmung, nachdem von einem Benutzer eine von einem ersten Eckpunkt ausgehende und zu verfolgende Kantenlinie ausgewählt wurde.

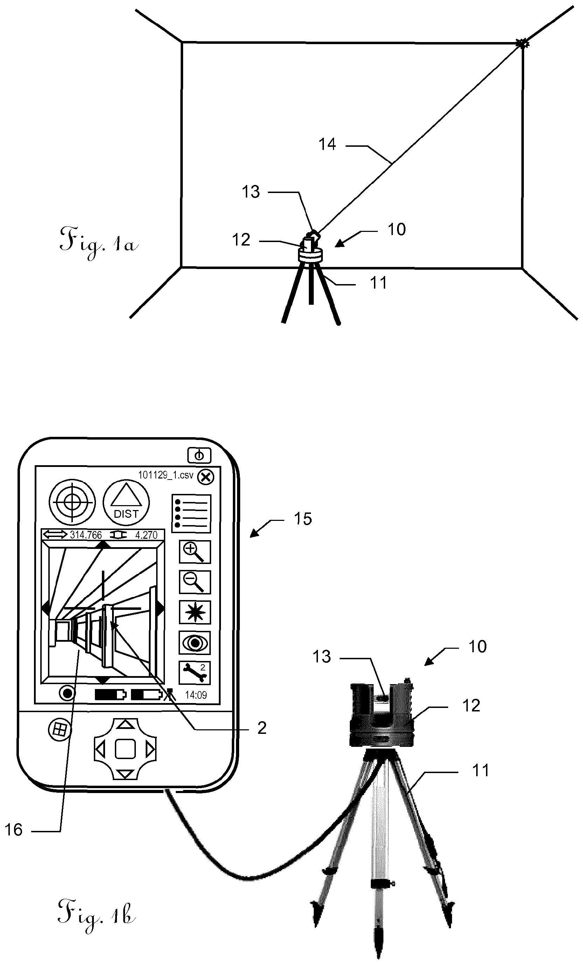

Figur 1a und 1b zeigen ein erfindungsgemässes Konstruktionsvermessungsgerät 10 zum Verfolgen und Vermessen bzw. Markieren von Raumpunkten von Oberflächen einer Konstruktion, insbesondere Innenräumen von Gebäuden. Das Konstruktionsvermessungsgerät 10 umfasst eine in diesem Beispiel als ein dreibeiniges Stativ ausgebildete Basis 11 mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor als Entfernungsbestimmungsdetektor ausgestattet und stellt damit eine Distanzmessfunktionalität bereit. Die Anzieleinheit 13 umfasst des Weiteren einen bildgebenden Detektor, insbesondere eine Kamera.

Das Konstruktionsvermessungsgerät 10 umfasst des Weiteren eine Auswerte- und Steuereinheit 15, wie in Figur 1b illustriert, wobei ein erster und ein zweiter Drehantrieb (nicht dargestellt) das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Zusätzlich können Neigungssensoren zur Bestimmung der Ausrichtung bezüglich des Schwerefeld-Vektors der Erde vorgesehen sein.

Die Auswerte- und Steuereinheit 15 verfügt über ein Display 16 mit einer Ausrichtungsanzeigefunktionalität 2.

Die Auswerte- und Steuereinheit 15 ist mit der Laserquelle, dem Laserlicht-Detektor sowie den Winkelmessern und gegebenenfalls mit den Neigungssensoren verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen. Ausserdem ist die Auswerte- und Steuereinheit 15 mit dem bildgebenden Detektor verbunden.

Erfindungsgemäss weist das Konstruktionsvermessungsgerät 10 eine nach Auslösung zumindest teilweise automatisch ablaufende Kantenverfolgungs- und Projektionsfunktionalität zum Verfolgen und Vermessen bzw. Markieren von Kanten und/oder Eckpunkten, und gegebenenfalls entlang einer Kante befindlichen Raumpunkten, zwischen aneinandergrenzenden, beliebig geformten Oberflächen der Konstruktion auf. Diese Funktionalität ist anhand der nachfolgenden Figuren illustriert.

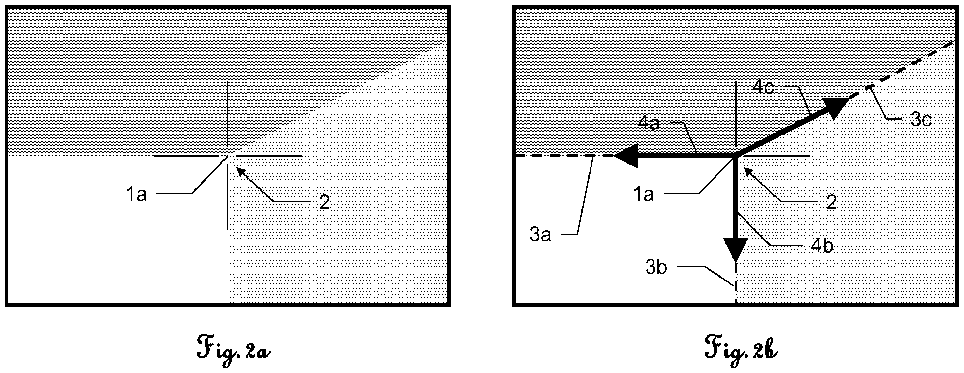

Figur 2a zeigt schematisch ein Bild auf dem Display 16 der Auswerte- und Steuereinheit 15 für eine Situation, bei welcher ein Benutzer mit der Anzieleinheit 13 einen ersten Eckpunkt 1a, beispielsweise an der Decke eines Raumes, anvisiert. Die Ausrichtung der Anzieleinheit 13 auf den Eckpunkt 1a ist im Display 16 mit einem Fadenkreuz als Ausrichtungsanzeigefunktionalität 2 angezeigt, wobei das Zentrum des Fadenkreuzes mit dem angezielten Eckpunkt 1a übereinstimmt.

Wie in Figur 2b dargestellt, wird nach Auslösung der Kantenverfolgungs- und Projektionsfunktionalität ein Bild des Eckpunkts 1a und seiner Umgebung aufgenommen. Basierend auf Bildverarbeitung werden alle vom Eckpunkt 1a ausgehenden Kantenlinien 3a, 3b und 3c bestimmt. Die Richtung der identifizierten Kantenlinien 3a, 3b, 3c kann dem Benutzer beispielsweise durch Richtungspfeile 4a, 4b, 4c als Symbole dargestellt werden.

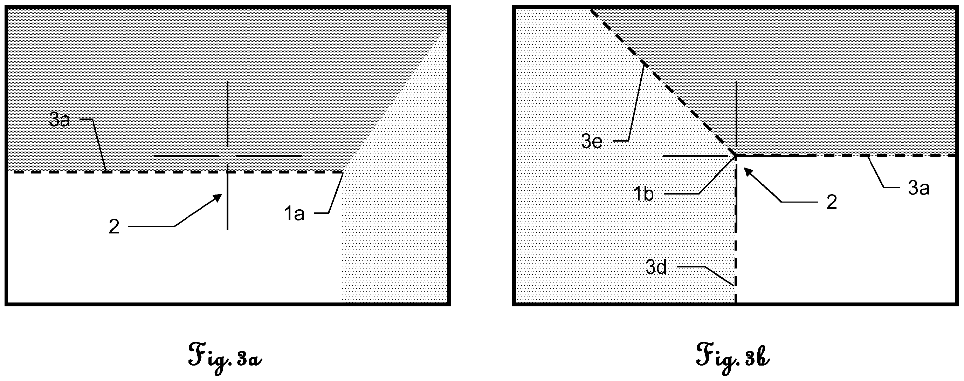

Durch Auswahl eines Symbols, beispielsweise 4a, zur Verfolgung der Kante 3a, und entsprechende Kommando-Eingabe an die Auswerte- und Steuereinheit 15, beispielsweise durch Maus-Klick auf das Symbol 4a, Berührung dieses Symbols auf einem Touchscreen oder Eingabe per Tastatur, wird die Auswerte- und Steuereinheit 15 dazu veranlasst, mittels Ansteuerung der Motorantriebe mit der Anzieleinheit 13 deren Ausrichtung, der Kantenlinie 3a folgend, zu ändern. Dieses ist in Figur 3a illustriert. Dabei werden fortlaufend Bilder aufgenommen, in denen mittels Bildverarbeitung die verfolgte Kantenlinie 3a bestimmt und eine Abweichung der aktuellen Anzielrichtung der Anzieleinheit 13, angezeigt durch das Zentrum des Fadenkreuzes als Ausrichtungsanzeigefunktionalität 2, von der Kantenlinie 3a bestimmt wird. Derartige Abweichungen werden in Winkelkorrekturen für die Ausrichtung der Anzieleinheit 13 umgerechnet, und deren Ausrichtung wird entsprechend automatisch korrigiert.

Wie in Figur 3b dargestellt, wird die Kantenlinie 3a automatisch weiter verfolgt, bis ein Kreuzungspunkt zweier oder mehrerer Kantenlinien 3a, 3d, 3e, entsprechend einem zweiten Eckpunkt 1b, ermittelt wird. Gemäss einer möglichen Ausführungsform der Erfindung wird die automatische Kantenverfolgungs- und Projektionsfunktionalität dann angehalten, und der Benutzer wird aufgefordert, eine Vermessung dieses zweiten Eckpunkts 1b oder eine Fortsetzung der Kantenverfolgungs- und Projektionsfunktionalität entlang einer weiteren Kantenlinie bis zu einem weiteren Eckpunkt zu veranlassen. Im letzteren Fall werden die Verfahrensschritte der Kantenverfolgungs- und Projektionsfunktionalität entsprechend den Illustrationen in den Figuren 2b, 3a und 3b und der zugehörigen vorangehenden Beschreibung wiederholt.

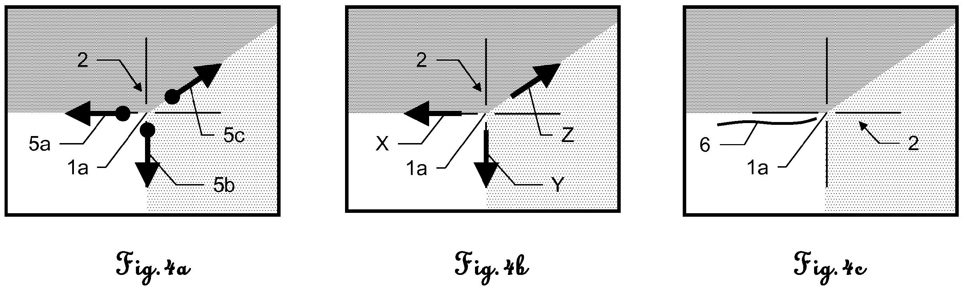

Ohne Beschränkung der Allgemeinheit sind in den Figuren 4a bis 4c verschiedene Varianten der Kantenverfolgungs- und Projektionsfunktionalität mit unterschiedlichen Eingabemöglichkeiten für einen Benutzer dargestellt, die Verfolgung einer Kantenlinie zu veranlassen, wobei im Detektorbild auf dem Display 16 jeweils die Ausrichtung der Anzieleinheit 13 auf einen ersten Eckpunkt 1a mittels der Ausrichtungsanzeigefunktionalität 2 angegeben ist.

Figur 4a illustriert Pfeile 5a, 5b, 5c, die auf einem als Touchscreen ausgebildeten Display 16 dargestellt werden und deren Berührung auf dem Display 16, beispielsweise mit einem Stift, eine Verfahrung der Anzieleinheit 13 entlang der angezeigten Richtung auslöst.

Figur 4b illustriert die Anzeige von alphanumerischen Zeichen X, Y, Z für unterschiedliche vorgeschlagene Verfahrungsrichtungen entlang verschiedener Kantenlinien auf dem Display 16, deren Eingabe über eine Tastatur eine entsprechende Verfahrung der Anzieleinheit veranlasst.

Figur 4c illustriert eine weitere Möglichkeit zur Veranlassung der Verfolgung einer Kantenlinie, indem der Benutzer auf einem Display 16 der Auswerte- und Steuereinheit 15 eine Linie 6 markiert, indem er, beispielsweise mittels eines Stifts auf einem Touchscreen, ausgehend nahe vom Eckpunkt 1a eine der abgehenden Kanten näherungsweise nachzieht.

Rückbeziehend auf die Figuren 2b und 3b wird eine besondere Ausführungsform des erfindungsgemässen Konstruktionsvermessungsgeräts erklärt, gemäss derer die Kantenverfolgungs- und Projektionsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

Ausgangspunkt für diese Option ist, dass bekanntermassen einer von Kantenlinien umschlossenen Oberfläche entsprechende Eckpunkte zugeordnet werden können und von dieser Oberfläche wegweisende Kantenlinien ausschliessbar sind. Aktuelle Aufgabenstellung kann beispielsweise die Bestimmung der vier Eckpunkte der Decke eines rechteckigen Raumes sein.

Bezugnehmend auf Figur 2b kann ein Benutzer nach Auswahl und Vermessung eines ersten Eckpunkts 1a und automatischer Bestimmung der davon ausgehenden Kantenlinien 3a, 3b, 3c die von der Decke wegführende Kantenlinie 3b ausschliessen, so dass als Alternativen nur noch potentiell zu verfolgende Kantenlinien 3a, 3c übrig bleiben. Beispielsweise werde die Kantenlinie 3a ausgewählt, weil sie in der zweidimensionalen Bilddarstellung die geringste Neigung zur Bildhorizontalen aufweist und damit mit grosser Wahrscheinlichkeit eine Begrenzungslinie einer Horizontalebene wie einer Zimmerdecke darstellt. Entsprechend dieser Option der besonderen Ausführungsform der Erfindung wird die Ausrichtung der Anzieleinheit 13 geändert, der Kantenlinie 3a folgend, bis der nächste Eckpunkt 1b, wie in Figur 3b dargestellt, erreicht wird. Gemäss dieser Funktionalitätsoption wird die Kantenlinie 3a als weiter zu verfolgende Kantenlinie ausgeschlossen, da sie bereits verfolgt wurde, ebenso wie die Kantenlinie 3d, welche von der Decke wegführt, und die Kantenlinienverfolgung und Vermessung der Raumpunkte bzw. Eckpunkte wird automatisch fortgesetzt, der Kantenlinie 3e folgend.

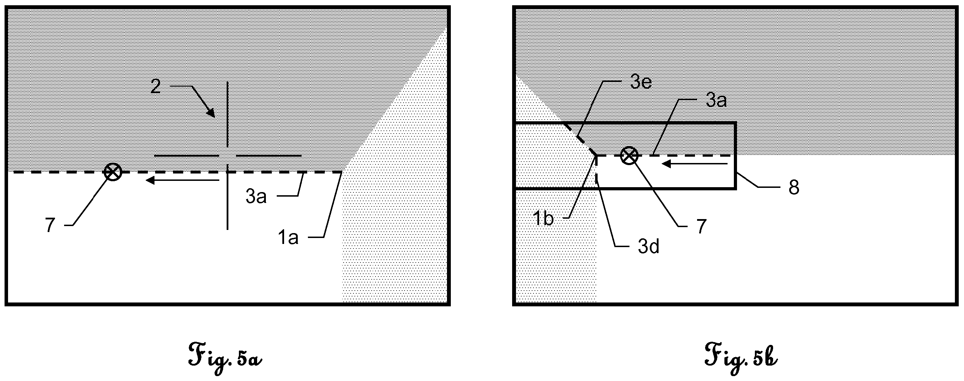

Die Figuren 5a und 5b illustrieren genauer die Funktionalitäten der Kantenverfolgung und -bestimmung sowie der Ermittlung von Eckpunkten.

Dabei dient Figur 5a einer Erklärung der Funktionalität der Kantenverfolgung für den Verfahrensablauf für eine sequentielle Eckpunktbestimmung, nachdem von einem Benutzer eine von einem Eckpunkt 1a ausgehende und zu verfolgende Kantenlinie 3a ausgewählt wurde. Entlang der Kantenlinie 3a wird ein darauf befindlicher beobachteter Raumpunkt 7 automatisch durch einen Algorithmus für die Kantenbestimmungsfunktionalität ausgewählt. Dieser Punkt 7 muss in der vom Benutzer ausgewählten Richtung entlang der zu verfolgenden Kantenlinie 3a, d.h. in diesem Beispiel der symbolisierten Display-Darstellung links von Eckpunkt 1a und dem Fadenkreuz als Ausrichtungsanzeigefunktionalität 2, angeordnet sein. Mittels der erfindungsgemässen Funktionalität wird überprüft, ob der Punkt 7 nahe zu einem Eckpunkt 1b, der im Detektorbild erfasst ist, angeordnet ist (siehe dazu auch nachfolgende Beschreibung zu Figur 5b). In diesem Fall wird die Anzieleinheit 13 automatisch auf den Eckpunkt 1b ausgerichtet und die automatische Kantenverfolgungsfunktionalität angehalten. Andernfalls, insbesondere bei Abweichung der Ausrichtung der Anzieleinheit 13 vom Verlauf der zu verfolgenden Kantenlinie 3a entsprechend der Anzeige der Ausrichtungsanzeigefunktionalität 2, werden Korrekturdaten basierend auf Messdaten für die aktuelle Ausrichtung des Anzieleinheit 13 und Kalibrationsdaten des erfindungsgemässen Konstruktionsvermessungsgeräts 10, insbesondere für die Messdaten des bildgebenden Detektors, berechnet und entsprechend die Ausrichtung der Anzieleinheit 13 nachgeführt.

Figur 5b illustriert die Bestimmung eines Eckpunkts 1b, bei dem sich Kantenlinien 3a, 3d, 3e schneiden. Im Rahmen einer Kontrollschleife der Kantenverfolgungs- und Projektionsfunktionalität wird überprüft, ob ein Punkt 7 als Zwischenpunkt nahe zu einem im Detektorbild erfassten Eckpunkt 1b gelegen ist. Eine Kantenbestimmung mittels Bildverarbeitung wird innerhalb eines Bildpunktgebiets 8 um den Punkt 7 durchgeführt, wobei die Grösse des Bildpunktgebiets 8 für die Kantenbestimmung vorzugsweise vom Benutzer definiert werden kann. Durch eine engere Bemessung des Bildpunktgebiets 8 können Rechenzeit und damit Zeitaufwand für den Vermessungsprozess deutlich reduziert werden. Dabei kann insbesondere eine optimierte Anpassung der Grösse eines zu analysierenden Bildpunktgebiets 8 an die Neigung der zu verfolgenden Kante 3a in der entsprechenden Bilddarstellung hilfreich sein.

In einer bevorzugten Ausführungsform muss zur Ausführung der Funktionalität die Anzieleinheit 13 zu Beginn nicht notwendigerweise bereits exakt auf den Eckpunkt 1a ausgerichtet sein (siehe Figur 3a). Es ist auch möglich, dass die Anzieleinheit 13 nur grob auf die Ecke die Anzieleinheit 13 nur grob auf die Ecke ausgerichtet ist, die Ecke sich jedoch im Blickfeld des bildgebenden Detektors befindet. Mittels Bildverarbeitung wird aus einem aufgenommenen Bild die Position der Ecke zum Beispiel als Schnittpunkt mehrerer sich schneidender Kanten extrahiert, aus dieser Position die Winkelablage berechnet und darauf basierend die Anzieleinheit 13 auf den Eckpunkt 1a ausgerichtet.

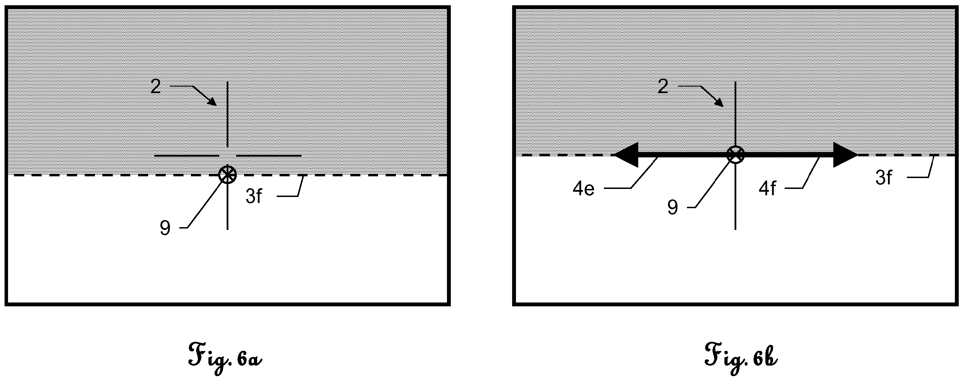

Wie in den Figuren 6a und 6b dargestellt, genügt es in einer bevorzugten Ausführungsform zum Start der Prozedur auch, dass sich statt eines Eckpunktes nur eine Kante 3f im Bildfeld der Kamera befindet. In diesem Fall wird das Vermessungsgerät 13 auf den auf dieser Kante 3f liegenden Punkt 9 ausgerichtet, der der aktuellen Ausrichtung am nächsten ist. In einem weiteren, in Figur 6b illustrierten Schritt wird dem Benutzer anschliessend die Möglichkeit geboten, durch Auswahl eines der Richtungspfeile 4e und 4f die Kante 3f in einer gewünschten Richtung bis zum nächsten Eckpunkt zu verfolgen, beispielsweise durch Berühren eines der Richtungspfeile 4e und 4f auf einem Touchscreen. Alternativ kann die Verfolgung der Kante 3f auch automatisch in einer der beiden Richtungen erfolgen.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

Die vorangehend beschriebene Erfindung ist dazu geeignet, den Prozess der Vermessung signifikanter Raumpunkten einer Konstruktion, insbesondere von Kanten und Eckpunkten innerhalb eines Raumes deutlich zu beschleunigen, verbunden mit einem erhöhten Bedienungskomfort für einen Benutzer.

## Patentansprüche

1. Vermessungsgerät (10) zum Vermessen von Raumpunkten entlang Kanten und/oder von Eckpunkten zwischen aneinandergrenzenden Oberflächen einer Konstruktion im Rahmen von Bau und/oder Ausbau von Gebäuden mit
• einem an einer Basis (11) um eine Drehachse drehbar gelagerten Oberteil (12),
• einer am Oberteil (12) um eine Schwenkachse schwenkbar gelagerten Anzieleinheit (13), ausgestattet mit einer zur Emission eines Laserstrahls (14) ausgebildeten Laserquelle, einem bildgebenden Detektor und einer Ausrichtungsanzeigefunktionalität (2) zur Angabe einer Ausrichtung der Anzieleinheit (13) auf einen Raumpunkt als Anzielpunkt, und
• einer Auswerte- und Steuereinheit (15),
wobei
• ein erster und ein zweiter Drehantrieb das Oberteil (12) bzw. die Anzieleinheit (13) antreib- und ausrichtbar machen,
• eine räumliche Ausrichtung der Anzieleinheit gegenüber der Basis (11) über zwei Winkelmesser erfassbar ist, und
• die Auswerte- und Steuereinheit (15) mit der Laserquelle, dem Entfernungsbestimmungsdetektor und den Winkelmessern verbunden ist, um eine erfasste Distanz einer entsprechenden Ausrichtung zuzuordnen und somit Koordinaten für Raumpunkte zu bestimmen, sowie mit dem bildgebenden Detektor verbunden ist,
**dadurch gekennzeichnet, dass**
das Vermessungsgerät (10) zum Vermessen von Kanten und/oder Eckpunkten zwischen aneinandergrenzenden, beliebig geformten Oberflächen der Konstruktion eine nach Auslösung zumindest teilweise automatisch ablaufende Kantenverfolgungsfunktionalität aufweist, in deren Rahmen, nach einer zumindest groben Ausrichtung der Anzieleinheit (13) mit der Ausrichtungsanzeigefunktionalität (2) auf einen bekannten bzw. von einem Benutzer definierten ersten Eckpunkt (1a) oder einem ersten Kantenpunkt (9) zwischen aneinandergrenzenden Oberflächen der Konstruktion und einer Bildaufnahme dieses ersten Eckpunkts (1a) oder dieses ersten Kantenpunkts (9) mit seiner Umgebung
• mittels einer Kantenbestimmung durch Bildverarbeitung Kantenlinien (3a, 3b, 3c, 3d, 3e, 3f) identifiziert werden,
• eine Abfrage erfolgt, welche der identifizierten Kantenlinien (3a, 3b, 3c) von dem ersten Eckpunkt (1a) aus bzw. in welcher Richtung die identifizierte Kantenlinie von dem ersten Kantenpunkt (9) aus weiter verfolgt werden soll,
• nach Erhalt einer entsprechenden Benutzereingabe die benutzerdefinierte Kantenlinie (3a, 3b, 3c) von der Anzieleinheit (13) mindestens bis zu einem weiteren Eckpunkt (1b) automatisch verfolgt wird, wobei entlang der benutzerdefinierten Kantenlinie (3a, 3b, 3c) befindliche Raumpunkte vermessen werden.

2. Vermessungsgerät (10) nach Anspruch 1, **dadurch gekennzeichnet, dass**
• die Kantenverfolgungsfunktionalität dazu ausgelegt ist, dem Benutzer auf einem Display (16) der Auswerte- und Steuereinheit (15) Vorschläge zur Verfolgung von Kantenlinien (3a, 3b, 3c) mittels kenntlich gemachter Kantenlinien und/oder durch Symbole (4a, 4b, 4c, 5a, 5b, 5c, X, Y, Z) darzustellen, und
• nach Auswahl und Bestätigung eines mittels einer kenntlich gemachten Kantenlinie und/oder durch ein Symbol (4a, 4b, 4c, 5a, 5b, 5c, X, Y, Z) dargestellten Vorschlags eine ausgewählte Kantenlinie (3a, 3b, 3c) von der Anzieleinheit (13) mindestens bis zu einem weiteren Eckpunkt (1b) automatisch verfolgt wird, insbesondere wobei entlang der benutzerdefinierten Kantenlinie (3a, 3b, 3c) befindliche Raumpunkte vermessen werden.

3. Vermessungsgerät (10) nach Anspruch 1 oder Anspruch 2,
**dadurch gekennzeichnet, dass**
die Kantenverfolgungsfunktionalität derart ausgelegt ist, dass im Rahmen der Verfolgung einer ausgewählten Kantenlinie (3a, 3b, 3c) durch entsprechende Veränderung der Ausrichtung der Anzieleinheit (13) in horizontaler und/oder elevativer Richtung kontinuierlich und/oder periodisch eine Aufnahme von Bildern und eine Bestimmung einer zu einer Kante gehörenden Kantenlinie (3a, 3b, 3c) mittels Kantenextraktion durch digitale Bildverarbeitung erfolgt, wobei im Bild eine Abweichung der Ausrichtungsanzeigenfunktionalität (2) von der zu der ausgewählten Kante gehörigen Kantenlinie (3a, 3b, 3c) bestimmt wird, woraus eine entsprechende Korrektur der Ausrichtung der Anzieleinheit (13) bestimmt wird, und darauf basierend die Anzieleinheit (13) auf die ausgewählte Kantenlinie (3a, 3b, 3c) ausgerichtet wird.

4. Vermessungsgerät (10) nach einem der Ansprüche 1 bis 3,
**dadurch gekennzeichnet, dass**
nach Verfolgung einer Kantenlinie (3a, 3b, 3c) von dem ersten Eckpunkt (1a) bis zu einem ersten weiteren Eckpunkt (1b)
• die Kantenverfolgungsfunktionalität angehalten wird,
• benutzerdefiniert eine Vermessung des ersten weiteren Eckpunkts (1b) durchgeführt wird, und/oder
• die Kantenverfolgungsfunktionalität bis zu einem weiteren Eckpunkt fortgesetzt wird.

5. Vermessungsgerät (10) nach einem der Ansprüche 1 bis 4,
**dadurch gekennzeichnet, dass**
dem Benutzer auf einem Display (16) der Auswerte- und Steuereinheit (15) Vorschläge zur Verfolgung von Kantenlinien (3a, 3b, 3c) dargestellt werden
• durch Symbole (4a, 4b, 4c, 5a, 5b, 5c), wobei eine Auswahl einer zu verfolgenden Kantenlinie (3a, 3b, 3c) bzw. Bestätigung eines Vorschlags durch Anklicken bzw. Berühren des zugehörigen Symbols (4a, 4b, 4c, 5a, 5b, 5c) auf einem Touchscreen.erfolgt; und/oder
• durch alphanumerische Zeichen (X, Y, Z), wobei eine Auswahl einer zu verfolgenden Kantenlinie (3a, 3b, 3c) bzw. Bestätigung eines Vorschlags durch Eingabe eines entsprechenden alphanumerischen Zeichens auf einer Tastatur der Auswerte- und Steuereinheit (15) erfolgt.

6. Vermessungsgerät (10) nach einem der Ansprüche 1 bis 5,
**dadurch gekennzeichnet, dass**
eine Auswahl einer zu verfolgenden Kantenlinie (3a, 3b, 3c) durch Markieren einer Linie (6) auf einem Display (16) der Auswerte- und Steuereinheit (15), insbesondere mittels eines Stifts auf einem Touchscreen, erfolgt.

7. Vermessungsgerät (10) nach einem der Ansprüche 1 bis 6,
**dadurch gekennzeichnet, dass**
die Kantenverfolgungsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

8. Vermessungsgerät (10) nach einem der Ansprüche 1 bis 7,
**dadurch gekennzeichnet, dass**
die Kantenverfolgungsfunktionalität zur Verfolgung von Kantenlinien (3a, 3b, 3c) ausgelegt ist, die
• rechtwinklig zueinander angeordnet sind;
• in einem von 90° abweichenden Winkel zueinander angeordnet sind; und/oder
• gebogen sind.

9. Verfahren zum Vermessen von Raumpunkten entlang Kanten und/oder von Eckpunkten zwischen aneinandergrenzenden Oberflächen einer Konstruktion im Rahmen von Bau und/oder Ausbau von Gebäuden mit einem Vermessungsgerät (10) mit
• einem an einer Basis (11) um eine Drehachse drehbar gelagerten Oberteil (12),
• einer am Oberteil (12) um eine Schwenkachse schwenkbar gelagerten Anzieleinheit (13), die Distanzmessfunktionalität in Form eines Entfernungsbestimmungsdetektors bereitstellt, ausgestattet mit einer zur Emission eines Laserstrahls (14) ausgebildeten Laserquelle, einem bildgebenden Detektor und einer Ausrichtungsanzeigefunktionalität (2) zur Angabe einer Ausrichtung der Anzieleinheit (13) auf einen Raumpunkt als Anzielpunkt, und
• einer Auswerte- und Steuereinheit (15),
wobei
• ein erster und ein zweiter Drehantrieb das Oberteil (12) bzw. die Anzieleinheit (13) antreib- und ausrichtbar machen,
• eine räumliche Ausrichtung der Anzieleinheit (13) gegenüber der Basis (11) über zwei Winkelmesser erfassbar ist und
• die Auswerte- und Steuereinheit (15) mit der Laserquelle, dem Entfernungsbestimmungsdetektor sowie den Winkelmessern verbunden ist, um eine erfasste Distanz einer entsprechenden Ausrichtung zuzuordnen und somit Koordinaten für Raumpunkte zu bestimmen, sowie mit dem bildgebenden Detektor verbunden ist,
**gekennzeichnet durch**
• ein zumindest grobes Ausrichten der Anzieleinheit (13) mit der Ausrichtungsanzeigefunktionalität (2) auf einen bekannten bzw. von einem Benutzer definierten ersten Eckpunkt (1a) oder ersten Kantenpunkt (9) zwischen aneinandergrenzenden Oberflächen der Konstruktion,
• ein Aufnehmen eines Bildes dieses ersten Eckpunktes (1a) oder ersten Kantenpunktes (9) mit seiner Umgebung,
• ein Identifizieren von Kantenlinien (3a, 3b, 3c, 3d, 3e) mittels einer Kantenbestimmung durch Bildverarbeitung,
• ein Abfragen einer Benutzerentscheidung, welche der identifizierten Kantenlinien (3a, 3b, 3c) bzw. in welcher Richtung die Kantenlinie (3a, 3b, 3c) weiter verfolgt werden soll, und
• ein Verfolgen der benutzerdefinierten Kantenlinie (3a, 3b, 3c) durch die Anzieleinheit (13) mindestens bis zu einem weiteren Eckpunkt (1b), wobei entlang der benutzerdefinierten Kantenlinie (3a, 3b, 3c) befindliche Raumpunkte vermessen werden.

10. Verfahren nach Anspruch 9,
**dadurch gekennzeichnet, dass**
• im Rahmen des Abfragens einer Benutzerentscheidung dem Benutzer Vorschläge zur Verfolgung von Kantenlinien (3a, 3b, 3c) durch auf einem Display (16) der Auswerte- und Steuereinheit (15) dargestellte Symbole (4a, 4b, 4c, 5a, 5b, 5c, X, Y, Z) gemacht werden, und
• nach Auswahl und Bestätigung eines durch ein Symbol (4a, 4b, 4c, 5a, 5b, 5c, X, Y, Z) dargestellten Vorschlags eine ausgewählte Kantenlinie (3a, 3b, 3c) von der Anzieleinheit (13) mindestens bis zu einem weiteren Eckpunkt (1b) automatisch verfolgt wird, insbesondere wobei entlang der benutzerdefinierten Kantenlinie (3a, 3b, 3c) befindliche Raumpunkte vermessen werden.

11. Verfahren nach Anspruch 9 oder 10,
**dadurch gekennzeichnet, dass**
im Rahmen der Verfolgung einer ausgewählten Kantenlinie (3a, 3b, 3c) durch entsprechende Veränderung der Ausrichtung der Anzieleinheit (13) in horizontaler und/oder elevativer Richtung kontinuierlich und/oder periodisch eine Aufnahme von Bildern und eine Bestimmung einer zu einer Kante gehörenden Kantenlinie (3a, 3b, 3c) mittels Kantenextraktion durch digitale Bildverarbeitung erfolgt, wobei im Bild eine Abweichung der Ausrichtungsanzeigenfunktionalität (2) von der zu der ausgewählten Kante gehörigen Kantenlinie (3a, 3b, 3c) bestimmt wird, woraus eine entsprechende Korrektur der Ausrichtung der Anzieleinheit (13) bestimmt wird und darauf basierend die Anzieleinheit (13) auf die ausgewählte Kantenlinie (3a, 3b, 3c) ausgerichtet wird.

12. Verfahren nach einem der Ansprüche 9 bis 11,
**dadurch gekennzeichnet, dass**
nach Verfolgung einer Kantenlinie (3a, 3b, 3c) von dem ersten Eckpunkt (1a) bis zu einem ersten weiteren Eckpunkt (1b) die Kantenverfolgungsfunktionalität angehalten, benutzerdefiniert eine Vermessung des ersten weiteren Eckpunkts (1b) durchgeführt und/oder die Kantenverfolgungsfunktionalität bis zu einem weiteren Eckpunkt fortgesetzt wird.

13. Verfahren nach einem der Ansprüche 9 bis 12,
**dadurch gekennzeichnet, dass**
dem Benutzer auf einem Display (16) der Auswerte- und Steuereinheit (15) Vorschläge zur Verfolgung von Kantenlinien (3a, 3b, 3c) dargestellt werden
• durch Symbole (4a, 4b, 4c, 5a, 5b, 5c), wobei eine Auswahl einer zu verfolgenden Kantenlinie (3a, 3b, 3c) bzw. Bestätigung eines Vorschlags durch Anklicken bzw. Berühren des zugehörigen Symbols (4a, 4b, 4c, 5a, 5b, 5c) auf einem Touchscreen erfolgt; und/oder
• durch alphanumerische Zeichen (X, Y, Z), wobei eine Auswahl einer zu verfolgenden Kantenlinie (3a, 3b, 3c) bzw. Bestätigung eines Vorschlags durch Eingabe eines entsprechenden alphanumerischen Zeichens auf einer Tastatur der Auswerte- und Steuereinheit (15) erfolgt.

14. Verfahren nach einem der Ansprüche 9 bis 13,
**dadurch gekennzeichnet, dass**
• eine Auswahl einer zu verfolgenden Kantenlinie (3a, 3b, 3c) durch Markieren einer Linie (6) auf einem Display (16) der Auswerte- und Steuereinheit (15), insbesondere mittels eines Stifts auf einem Touchscreen, erfolgt; und/oder
• die Kantenverfolgungsfunktionalität ausgestattet ist zur Bereitstellung einer Option für eine automatische Verfolgung und Vermessung von Kantenlinien entlang eines kontinuierlichen Pfads zwischen mehreren benachbarten Eckpunkten, wobei die Kantenlinien eine gemeinsame Oberfläche der Konstruktion umschliessen.

15. Computerprogrammprodukt mit Programmcode, der auf einem maschinenlesbaren Träger gespeichert ist, zur Durchführung des Verfahrens nach einem der Ansprüche 9 bis 14, insbesondere wenn das Programm auf einer als Auswerte- und Steuereinheit (15) des Vermessungsgeräts (10) nach einem der Ansprüche 1 bis 8 ausgebildeten elektronischen Datenverarbeitungseinheit ausgeführt wird.

## Claims

1. A measuring unit (10) for measuring spatial points along edges and/or corners between adjacent surfaces of a structure within the scope of building and/or extending buildings, comprising
• a top part (12), mounted on a base (11) such that it is rotatable about a rotational axis,
• a sighting unit (13) which is mounted on the top part (12) such that it is pivotable about a pivot axis and equipped with a laser source designed to emit a laser beam (14), an imaging detector and an alignment-display functionality (2) for specifying an alignment of the sighting unit (13) on a spatial point as sighting point, and
• an evaluation and control unit (15),
wherein
• a first and a second rotational drive render it possible to drive and align the top part (12) or the sighting unit (13),
• a spatial alignment of the sighting unit in relation to the base (11) can be detected by two goniometers, and
• the evaluation and control unit (15) is connected to the laser source, the distance-determination detector and the goniometers in order to associate a detected distance with a corresponding alignment and hence determine coordinates for spatial points, and it is also connected to the imaging detector,
**characterized in that**
the measuring unit (10) for measuring edges and/or corners between adjacent surfaces of any form of the structure has an edge-tracking functionality, which runs at least partly automatically after triggering and within the scope of which, after an at least coarse alignment of the sighting unit (13) with the alignment-display functionality (2) to a known or user-defined first corner (1a) or with a first edge point (9) between adjacent surfaces of the structure and recording an image of this first corner (1a) or this first edge point (9) with the surroundings thereof,
• edge lines (3a, 3b, 3c, 3d, 3e, 3f) are identified by determining edges by image processing,
• there is a query relating to which of the identified edge lines (3a, 3b, 3c) should be continued to be tracked from the first corner (1a) or in which direction the identified edge line should be continued to be tracked from the first edge point (9),
• after obtaining a corresponding user input, the user-defined edge line (3a, 3b, 3c) is automatically tracked by the sighting unit (13), at least until a further corner (1b), wherein spatial points situated along the user-defined edge line (3a, 3b, 3c) are measured.

2. The measuring unit (10) as claimed in claim 1,
**characterized in that**
• the edge-tracking functionality is designed to display to the user on a display (16) of the evaluation and control unit (15) suggestions for tracking edge lines (3a, 3b, 3c) by means of identified edge lines and/or by symbols (4a, 4b, 4c, 5a, 5b, 5c, X, Y, Z) and,
• after selecting and confirming a suggestion represented by means of an identified edge line and/or by a symbol (4a, 4b, 4c, 5a, 5b, 5c, X, Y, Z), a selected edge line (3a, 3b, 3c) is automatically tracked by the sighting unit (13), at least until a further corner (1b), in particular wherein spatial points situated along the user-defined edge line (3a, 3b, 3c) are measured.

3. The measuring unit (10) as claimed in claim 1 or claim 2,
**characterized in that**
the edge-tracking functionality is designed such that, within the scope of tracking a selected edge line (3a, 3b, 3c) by an appropriate change in the alignment of the sighting unit (13) in the horizontal and/or elevation direction, there is continuous and/or periodic recording of images and determining of an edge line (3a, 3b, 3c) belonging to an edge by means of edge extraction using digital image processing, wherein a deviation of the alignment-display functionality (2) from the edge line (3a, 3b, 3c) belonging to the selected edge is determined in the image, from which a corresponding correction of the alignment of the sighting unit (13) is determined and, on the basis of this, the sighting unit (13) is aligned to the selected edge line (3a, 3b, 3c).

4. The measuring unit (10) as claimed in any one of claims 1 to 3,
**characterized in that,**
after tracking an edge line (3a, 3b, 3c) from the first corner (1a) to a first further corner (1b),
• the edge-tracking functionality is halted,
• the first further corner (1b) is measured in a user-defined manner, and/or
• the edge-tracking functionality is continued to a further corner.

5. The measuring unit (10) as claimed in any one of claims 1 to 4,
**characterized in that**
suggestions for tracking edge lines (3a, 3b, 3c) are displayed to the user on a display (16) of the evaluation and control unit (15)
• by means of symbols (4a, 4b, 4c, 5a, 5b, 5c), wherein an edge line (3a, 3b, 3c) to be tracked is selected or a suggestion is confirmed by clicking on or touching the associated symbol (4a, 4b, 4c, 5a, 5b, 5c) on a touchscreen; and/or
• by means of alphanumeric characters (X, Y, Z), wherein an edge line (3a, 3b, 3c) to be tracked is selected or a suggestion is confirmed by entering a corresponding alphanumeric character on a keyboard of the evaluation and control unit (15).

6. The measuring unit (10) as claimed in any one of claims 1 to 5,
**characterized in that**
an edge line (3a, 3b, 3c) to be tracked is selected by marking a line (6) on a display (16) of the evaluation and control unit (15), in particular by means of a pen on a touchscreen.

7. The measuring unit (10) as claimed in any one of claims 1 to 6,
**characterized in that**
the edge-tracking functionality is equipped for providing an option for automated tracking and measuring of edge lines along a continuous path between a plurality of neighboring corners, wherein the edge lines enclose a common surface of the structure.

8. The measuring unit (10) as claimed in any one of claims 1 to 7,
**characterized in that**
the edge-tracking functionality is designed for tracking edge lines (3a, 3b, 3c), which
• are arranged at right angles to one another;
• are arranged at an angle to one another which deviates from 90°; and/or
• are curved.

9. A method for measuring spatial points along edges and/or corners between adjacent surfaces of a structure within the scope of building and/or extending buildings, using a measuring unit (10) comprising
• a top part (12), mounted on a base (11) such that it is rotatable about a rotational axis,
• a sighting unit (13) which is mounted on the top part (12) such that it is pivotable about a pivot axis, provides distance-measuring functionality in the form of a distance-determination detector, and is equipped with a laser source designed to emit a laser beam (14), an imaging detector and an alignment-display functionality (2) for specifying an alignment of the sighting unit (13) on a spatial point as sighting point, and
• an evaluation and control unit (15),
wherein
• a first and a second rotational drive render it possible to drive and align the top part (12) or the sighting unit (13),
• a spatial alignment of the sighting unit (13) in relation to the base (11) can be detected by two goniometers, and
• the evaluation and control unit (15) is connected to the laser source, the distance-determination detector and the goniometers in order to associate a detected distance with a corresponding alignment and hence determine coordinates for spatial points, and it is also connected to the imaging detector,
**characterized by**
• at least coarse alignment of the sighting unit (13) with the alignment-display functionality (2) to a known or user-defined first corner (1a) or first edge point (9) between adjacent surfaces of the structure,
• recording an image of this first corner (1a) or first edge point (9) with its surroundings,
• identifying edge lines (3a, 3b, 3c, 3d, 3e) by determining edges by image processing,
• querying a user decision as to which of the identified edge lines (3a, 3b, 3c) or in which direction the edge line (3a, 3b, 3c) should be continued to be tracked, and
• tracking the user-defined edge line (3a, 3b, 3c) by the sighting unit (13), at least until a further corner (1b), wherein spatial points situated along the user-defined edge line (3a, 3b, 3c) are measured.

10. The method as claimed in claim 9,
**characterized in that**
• suggestions for tracking edge lines (3a, 3b, 3c) are made to the user within the scope of querying a user decision by symbols (4a, 4b, 4c, 5a, 5b, 5c, X, Y, Z) displayed on a display (16) of the evaluation and control unit (15) and,
• after selecting and confirming a suggestion represented by a symbol (4a, 4b, 4c, 5a, 5b, 5c, X, Y, Z), a selected edge line (3a, 3b, 3c) is automatically tracked by the sighting unit (13), at least until a further corner (1b), in particular wherein spatial points situated along the user-defined edge line (3a, 3b, 3c) are measured.

11. The method as claimed in claim 9 or 10,
**characterized in that,**
within the scope of tracking a selected edge line (3a, 3b, 3c) by an appropriate change in the alignment of the sighting unit (13) in the horizontal and/or elevation direction, there is continuous and/or periodic recording of images and determining of an edge line (3a, 3b, 3c) belonging to an edge by means of edge extraction using digital image processing, wherein a deviation of the alignment-display functionality (2) from the edge line (3a, 3b, 3c) belonging to the selected edge is determined in the image, from which a corresponding correction of the alignment of the sighting unit (13) is determined and, on the basis of this, the sighting unit (13) is aligned to the selected edge line (3a, 3b, 3c).

12. The method as claimed in any one of claims 9 to 11,
**characterized in that,**
after tracking an edge line (3a, 3b, 3c) from the first corner (1a) to a first further corner (1b), the edge-tracking functionality is halted, the first further corner (1b) is measured in a user-defined manner, and/or the edge-tracking functionality is continued to a further corner.

13. The method as claimed in any one of claims 9 to 12,
**characterized in that**
suggestions for tracking edge lines (3a, 3b, 3c) are displayed to the user on a display (16) of the evaluation and control unit (15)
• by means of symbols (4a, 4b, 4c, 5a, 5b, 5c), wherein an edge line (3a, 3b, 3c) to be tracked is selected or a suggestion is confirmed by clicking on or touching the associated symbol (4a, 4b, 4c, 5a, 5b, 5c) on a touchscreen; and/or
• by means of alphanumeric characters (X, Y, Z), wherein an edge line (3a, 3b, 3c) to be tracked is selected or a suggestion is confirmed by entering a corresponding alphanumeric character on a keyboard of the evaluation and control unit (15).

14. The method as claimed in any one of claims 9 to 13,
**characterized in that**
• an edge line (3a, 3b, 3c) to be tracked is selected by marking a line (6) on a display (16) of the evaluation and control unit (15), in particular by means of a pen on a touchscreen; and/or
• the edge-tracking functionality is equipped for providing an option for automatic tracking and measuring of edge lines along a continuous path between a plurality of neighboring corners, wherein the edge lines enclose a common surface of the structure.

15. A computer program product with program code, which is stored on a machine-readable medium, for carrying out the method as claimed in any one of claims 9 to 14, in particular if the program is executed on an electronic data processing unit embodied as evaluation and control unit (15) of the measuring unit (10) as claimed in any one of claims 1 to 8.

## Revendications

1. Appareil topographique (10) destiné à mesurer des points dans l'espace le long d'arêtes et/ou des points d'angle entre des surfaces mutuellement limitrophes d'une construction dans le cadre de la construction et/ou de l'extension de bâtiments, avec
• une partie supérieure (12) supportée sur une base (11) de façon à pouvoir tourner autour d'un axe de rotation,
• une unité de visée (13) supportée sur la partie supérieure (12) de façon à pouvoir pivoter autour d'un axe de pivotement, équipée d'une source laser constituée pour l'émission d'un faisceau laser (14), d'un détecteur produisant des images et d'une fonctionnalité d'indication d'éloignement (2) pour l'indication d'un alignement de l'unité de visée (13) sur un point dans l'espace en tant que point de visée, et
• une unité d'analyse et de commande (15),
• un premier et un deuxième entraînement rotatif rendant la partie supérieure (12) ou respectivement l'unité de visée (13) apte à être entraînée et alignée,
• un alignement spatial de l'unité de visée par rapport à la base (11) pouvant être détecté par le biais de deux goniomètres, et
• l'unité d'analyse et de commande (15) étant raccordée à la source laser, au détecteur de définition d'éloignement et aux goniomètres afin d'affecter une distance détectée à un alignement correspondant et définir ainsi des coordonnées pour des points dans l'espace, et étant également raccordée au détecteur produisant des images,
**caractérisé en ce que**
l'appareil topographique (10) destiné à mesurer des arêtes et/ou des points d'angle entre des surfaces mutuellement limitrophes de forme quelconque de la construction présente une fonctionnalité de suivi des arêtes se déroulant au moins partiellement automatiquement après le déclenchement, dans le cadre de laquelle, après un alignement au moins grossier de l'unité de visée (13) avec la fonctionnalité d'indication d'éloignement (2) sur un premier point d'angle (1a) connu ou respectivement défini par un utilisateur ou un premier point d'arête (9) entre des surfaces mutuellement limitrophes de la construction et une capture d'image de ce premier point d'angle (1a) ou de ce premier point d'arête (9) avec son environnement
• des lignes d'arête (3a, 3b, 3c, 3d, 3e, 3f) sont identifiées au moyen d'une définition d'arête par traitement d'image,
• il est demandé laquelle des lignes d'arête (3a, 3b, 3c) identifiées doit continuer à être suivie à partir du premier point d'angle (la), ou respectivement dans quelle direction la ligne d'arête identifiée doit continuer à être suivie à partir du premier point d'arête (9),
• après l'obtention d'une entrée utilisateur correspondante, la ligne d'arête (3a, 3b, 3c) définie par l'utilisateur est suivie automatiquement par l'unité de visée (13) au moins jusqu'à un point d'angle (1b) supplémentaire, des points dans l'espace situés le long de la ligne d'arête (3a, 3b, 3c) définie par l'utilisateur étant mesurés.

2. Appareil topographique (10) selon la revendication 1, **caractérisé en ce que**
• la fonctionnalité de suivi des arêtes est conçue pour représenter, à l'intention de l'utilisateur, sur un afficheur (16) de l'unité d'analyse et de commande (15), des propositions de suivi de lignes d'arête (3a, 3b, 3c) au moyen de lignes d'arête rendues reconnaissables et/ou par des symboles (4a, 4b, 4c, 5a, 5b, 5c, X, Y, Z) et,
• après la sélection et la confirmation d'une proposition représentée au moyen d'une ligne d'arête rendue reconnaissable et/ou par un symbole (4a, 4b, 4c, 5a, 5b, 5c, X, Y, Z), une ligne d'arête (3a, 3b, 3c) sélectionnée est suivie automatiquement par l'unité de visée (13) au moins jusqu'à un point d'angle (1b) supplémentaire, en particulier des points dans l'espace situés le long de la ligne d'arête (3a, 3b, 3c) définie par l'utilisateur étant mesurés.

3. Appareil topographique (10) selon la revendication 1 ou la revendication 2, **caractérisé en ce que**
la fonctionnalité de suivi des arêtes est conçue de telle sorte que, dans le cadre du suivi d'une ligne d'arête (3a, 3b, 3c) sélectionnée par une modification correspondante de l'alignement de l'unité de visée (13) dans une direction horizontale ou d'élévation, de façon continue et/ou périodique, une capture d'images et une définition d'une ligne d'arête (3a, 3b, 3c) appartenant à une arête sont effectuées au moyen d'une extraction d'arête par un traitement numérique d'image, une divergence, dans l'image, entre la fonctionnalité d'indication d'éloignement (2) et la ligne d'arête (3a, 3b, 3c) appartenant à l'arête sélectionnée étant définie, à partir de quoi une correction correspondante de l'alignement de l'unité de visée (13) est définie et, sur cette base, l'unité de visée (13) est alignée sur la ligne d'arête (3a, 3b, 3c) sélectionnée.

4. Appareil topographique (10) selon l'une des revendications 1 à 3, **caractérisé en ce que,**
après le suivi d'une ligne d'arête (3a, 3b, 3c) à partir du premier point d'angle (1a) jusqu'à un premier point d'angle (1b) supplémentaire
• la fonctionnalité de suivi des arêtes est arrêtée,
• une mesure, définie par l'utilisateur, du premier point d'angle (1b) supplémentaire est effectuée, et/ou
• la fonctionnalité de suivi des arêtes est poursuivie jusqu'à un point d'angle supplémentaire.

5. Appareil topographique (10) selon l'une des revendications 1 à 4, **caractérisé en ce que,**
des propositions de suivi de lignes d'arête (3a, 3b, 3c) sont représentées à l'intention de l'utilisateur, sur un afficheur (16) de l'unité d'analyse et de commande (15),
• par des symboles (4a, 4b, 4c, 5a, 5b, 5c), une sélection d'une ligne d'arête (3a, 3b, 3c) à suivre ou respectivement une confirmation d'une proposition étant réalisée par un clic effectué sur le symbole (4a, 4b, 4c, 5a, 5b, 5c) correspondant ou respectivement par un contact avec celui-ci sur un écran tactile ; et/ou
• par des caractères alphanumériques (X, Y, Z), une sélection d'une ligne d'arête (3a, 3b, 3c) à suivre ou respectivement une confirmation d'une proposition étant effectuée par l'entrée d'un caractère alphanumérique correspondant sur un clavier de l'unité d'analyse et de commande (15).

6. Appareil topographique (10) selon l'une des revendications 1 à 5, **caractérisé en ce**
**qu'**une sélection d'une ligne d'arête (3a, 3b, 3c) à suivre s'effectue par le marquage d'une ligne (6) sur un afficheur (16) de l'unité d'analyse et de commande (15), en particulier au moyen d'un crayon sur un écran tactile.

7. Appareil topographique (10) selon l'une des revendications 1 à 6, **caractérisé en ce que**
la fonctionnalité de suivi des arêtes est équipée pour la fourniture d'une option pour un suivi et un mesurage automatiques de lignes d'arête le long d'un chemin continu entre plusieurs points d'angle voisins, les lignes d'arête entourant une surface commune de la construction.

8. Appareil topographique (10) selon l'une des revendications 1 à 7, **caractérisé en ce que**
la fonctionnalité de suivi des arêtes est conçue pour le suivi de lignes d'arête (3a, 3b, 3c) qui
• sont disposées à angle droit les unes par rapport aux autres ;
• qui sont disposées en faisant un angle entre elles qui est différent de 90° ; et/ou
• qui sont courbées.

9. Procédé pour la mesure de points dans l'espace le long d'arêtes et/ou de points d'angle entre des surfaces mutuellement limitrophes d'une construction dans le cadre de la construction et/ou de l'extension de bâtiments avec un appareil topographique (10) avec
• une partie supérieure (12) supportée sur une base (11) de façon à pouvoir tourner autour d'un axe de rotation,
• une unité de visée (13) supportée sur la partie supérieure (12) de façon à pouvoir pivoter autour d'un axe de pivotement, qui fournit une fonctionnalité de mesure de distance sous la forme d'un détecteur de définition d'éloignement, équipé d'une source laser constituée pour l'émission d'un faisceau laser (14), un détecteur produisant des images et une fonctionnalité d'indication d'éloignement (2) destinée à l'indication d'un alignement de l'unité de visée (13) sur un point dans l'espace en tant que point de visée, et
• une unité d'analyse et de commande (15),
• un premier et un deuxième entraînement rotatif rendant la partie supérieure (12) ou respectivement l'unité de visée (13) apte à être entraînée et alignée,
• un alignement spatial de l'unité de visée par rapport à la base (11) pouvant être détecté par le biais de deux goniomètres, et
• l'unité d'analyse et de commande (15) étant raccordée à la source laser, au détecteur de définition d'éloignement ainsi qu'aux goniomètres afin d'affecter une distance détectée à un alignement correspondant et définir ainsi des coordonnées pour des points dans l'espace, et étant également raccordée au détecteur produisant des images,
**caractérisé par**
• un alignement au moins grossier de l'unité de visée (13) avec la fonctionnalité d'indication d'éloignement (2) sur un premier point d'angle (1a) connu ou respectivement défini par un utilisateur ou un premier point d'arête (9) entre des surfaces mutuellement limitrophes de la construction,
• une capture d'une image de ce premier point d'angle (1a) ou de ce premier point d'arête (9) avec son environnement,
• une identification de lignes d'arête (3a, 3b, 3c, 3c, 3e) au moyen d'une définition d'arêtes par traitement d'images,
• une demande d'une décision d'utilisateur indiquant laquelle des lignes d'arête (3a, 3b, 3c) identifiées doit continuer à être suivie ou respectivement dans quelle direction la ligne d'arête (3a, 3b, 3c) doit continuer à être suivie,
• un suivi de la ligne d'arête (3a, 3b, 3c) définie par l'utilisateur par l'unité de visée (13) au moins jusqu'à un point d'angle (1b) supplémentaire, des points dans l'espace situés le long de la ligne d'arête (3a, 3b, 3c) définie par l'utilisateur étant mesurés.

10. Procédé selon la revendication 9,
**caractérisé en ce que**
• dans le cadre de la demande d'une décision d'utilisateur, des propositions de suivi de lignes d'arête (3a, 3b, 3c) sont faites à l'intention de l'utilisateur par des symboles (4a, 4b, 4c, 5a, 5b, 5c, X, Y, Z) représentés sur un afficheur (16) de l'unité d'analyse et de commande (15), et
• après la sélection et la confirmation d'une proposition représentée par un symbole (4a, 4b, 4c, 5a, 5b, 5c, X, Y, Z), une ligne d'arête (3a, 3b, 3c) sélectionnée est suivie automatiquement par l'unité de visée (13) au moins jusqu'à un point d'angle (1b) supplémentaire, en particulier des points dans l'espace situés le long de la ligne d'arête (3a, 3b, 3c) définie par l'utilisateur étant mesurés.

11. Procédé selon la revendication 9 ou 10,
**caractérisé en ce que,**
dans le cadre du suivi d'une ligne d'arête (3a, 3b, 3c) sélectionnée par une modification correspondante de l'alignement de l'unité de visée (13) dans une direction horizontale ou d'élévation, de façon continue et/ou périodique, une capture d'images et une définition d'une ligne d'arête (3a, 3b, 3c) appartenant à une arête sont effectuées au moyen d'une extraction d'arête par un traitement numérique d'image, une divergence, dans l'image, entre la fonctionnalité d'indication d'éloignement (2) et la ligne d'arête (3a, 3b, 3c) appartenant à l'arête sélectionnée étant définie, à partir de quoi une correction correspondante de l'alignement de l'unité de visée (13) est définie et, sur cette base, l'unité de visée (13) est alignée sur la ligne d'arête (3a, 3b, 3c) sélectionnée.

12. Procédé selon l'une des revendications 9 à 11,
**caractérisé en ce que,**
après le suivi d'une ligne d'arête (3a, 3b, 3c) à partir du premier point d'angle (1a) jusqu'à un premier point d'angle (1b) supplémentaire, la fonctionnalité de suivi des arêtes est arrêtée, une mesure, définie par l'utilisateur, du premier point d'angle (1b) supplémentaire est effectuée, et/ou la fonctionnalité de suivi des arêtes est poursuivie jusqu'à un point d'angle supplémentaire.

13. Procédé selon l'une des revendications 9 à 12,
**caractérisé en ce que**
des propositions de suivi de lignes d'arête (3a, 3b, 3c) sont représentées à l'intention de l'utilisateur sur un afficheur (16) de l'unité d'analyse et de commande (15),
• par des symboles (4a, 4b, 4c, 5a, 5b, 5c), une sélection d'une ligne d'arête (3a, 3b, 3c) à suivre ou respectivement une confirmation d'une proposition est réalisée par un clic effectué sur le symbole (4a, 4b, 4c, 5a, 5b, 5c) correspondant ou respectivement par un contact avec celui-ci sur un écran tactile ; et/ou
• par des caractères alphanumériques (X, Y, Z), une sélection d'une ligne d'arête (3a, 3b, 3c) à suivre ou respectivement une confirmation d'une proposition étant effectuée par l'entrée d'un caractère alphanumérique correspondant sur un clavier de l'unité d'analyse et de commande (15).

14. Procédé selon l'une des revendications 9 à 13,
**caractérisé en ce**
• **qu'**une sélection d'une ligne d'arête (3a, 3b, 3c) à suivre s'effectue par le marquage d'une ligne (6) sur un afficheur (16) de l'unité d'analyse et de commande (15), en particulier au moyen d'un crayon sur un écran tactile ; et/ou
• la fonctionnalité de suivi des arêtes est équipée pour la fourniture d'une option pour un suivi et un mesurage automatiques de lignes d'arête le long d'un chemin continu entre plusieurs points d'angle voisins, les lignes d'arête entourant une surface commune de la construction.

15. Produit de programme informatique avec code du programme qui est enregistré sur un support lisible par une machine, pour la réalisation du procédé selon l'une des revendications 9 à 14, en particulier quand le programme est exécuté sur une unité de traitement de données électronique constituée en tant qu'unité d'analyse et de commande (15) de l'appareil topographique (10) selon l'une des revendications 1 à 8.
